**Europäisches Patentamt**

**European Patent Office**

**Office européen des brevets**

(19)

(11) Numéro de publication : **0 476 527 B1**

(12)

# FASCICULE DE BREVET EUROPEEN

(45) Date de publication du fascicule du brevet :
**11.01.95 Bulletin 95/02**

(51) Int. Cl.[6] : **G02F 1/1337**

(21) Numéro de dépôt : **91115503.4**

(22) Date de dépôt : **13.09.91**

(54) **Cellule à cristal liquide comprenant une plaque munie d'une couche d'alignement thermosensible.**

(30) Priorité : **21.09.90 FR 9011782**

(43) Date de publication de la demande :
**25.03.92 Bulletin 92/13**

(45) Mention de la délivrance du brevet :
**11.01.95 Bulletin 95/02**

(84) Etats contractants désignés :
**CH DE FR GB IT LI NL**

(56) Documents cités :
**EP-A- 0 217 641**
**EP-A- 0 317 942**
**EP-A- 0 363 908**
**PATENT ABSTRACTS OF JAPAN, vol. 11, no.**
**256 (P-607), 20 août 1987 ; & JP-A-62 062 332**

(73) Titulaire : **ASULAB S.A.**
**Faubourg du Lac 6**
**CH-2501 Bienne (CH)**

(72) Inventeur : **Basturk, Naci**
**Chemin Marinière 71**
**CH-2068 Hauterive (CH)**

(74) Mandataire : **de Raemy, Jacques et al**
**ICB**
**Ingénieurs Conseils en Brevets SA**
**Passage Max. Meuron 6**
**CH-2001 Neuchâtel (CH)**

EP 0 476 527 B1

## Description

La présente invention concerne une cellule à cristal liquide comprenant deux lames séparées par un cadre de scellement définissant un volume étanche dans lequel est emprisonné un matériau optiquement actif comportant un moins un cristal liquide dont une caractéristique optique est susceptible d'être modifiée quand il est soumis à au moins une contrainte déterminée. Elle concerne plus particulièrement une cellule à cristal liquide dont la paroi d'au moins l'une des lames, en contact avec le matériau optiquement actif, comprend une couche d'alignement dont la nature d'alignement qu'elle induit varie en fonction de la température.

Une cellule à cristal liquide comprend généralement deux lames entre lesquelles est interposé un cadre de scellement pour former un volume étanche dans lequel sont emprisonnées des molécules de cristal liquide (voir, par exemple, EP-A-217641 ou EP-A-363908). Chaque lame comprend un jeu d'électrodes recouvert d'une couche d'alignement permettant d'induire une orientation déterminée des molécules de cristal liquide qui se trouvent au voisinage immédiat des lames. Et l'absence de champ appliqué entre les électrodes, la cellule se trouve dans un état optique déterminé, transparent ou opaque selon l'alignement initial du cristal liquide et le ou les éléments optiques (polariseurs, colorants dichroïques ...) associés à la cellule. Lorsque l'on applique une tension électrique, les molécules du cristal liquide changent d'orientation faisant passer la cellule dans l'état optique complémentaire.

On trouve parmi les couches d'alignement deux types d'alignement fondamentaux qui sont, d'une part, l'alignement planaire et, d'autre part, l'alignement homéotrope.

L'alignement planaire permet d'induire au voisinage des lames un alignement des molécules du cristal liquide dans une direction sensiblement parallèle à la surface de celles-ci, tandis que l'alignement homéotrope permet d'induire au voisinage des lames un alignement des molécules du cristal liquide dans une direction sensiblement perpendiculaire à la surface de celles-ci, les molécules de cristal liquide se trouvant dans le reste du volume de la cellule étant alignées dans le même sens, parallèle à la surface ou perpendiculaire à la surface selon l'alignement, par interaction moléculaire.

En pratique, pour assurer un basculement homogène des molécules de cristal liquide dans une seule direction lorsqu'on applique un champ électrique entre les électrodes, on prévoit un alignement légèrement incliné par rapport à la surface de la lame dans le cas d'un alignement planaire ou par rapport à la normale à la surface de la lame dans le cas d'un alignement homéotrope. Cette inclinaison désignée généralement par le mot anglais "tilt" (qui veut dire inclinaison) peut varier de quelques dixièmes de degré à 30° environ selon la nature du cristal liquide utilisé.

Les angles d'inclinaison (angles de "tilt") les plus faibles sont obtenus par brossage de la couche d'alignement dans le cas de l'alignement planaire et par brossage d'une sous-couche sur laquelle sont fixés des agents surfactants dans le cas d'un alignement homéotrope.

Pour les angles d'inclinaison plus élevés, la couche d'alignement ou la sous-couche d'alignement est déposée par évaporation sous vide sous incidence rasante.

De façon courante, on utilise du polyimide pour réaliser la couche d'alignement planaire et du $SiO_x$ sur lequel est fixé un agent surfactant du type octadécytrialkoxysilane pour l'alignement homéotrope.

On a constaté que les polymères appartenant à la famille des polymères halogénés solubles du type éthylénique substitué éthylène cycloaliphatique ou hétérocycloaliphatique pouvaient être utilisés avantageusement comme couche d'alignement et que, contre toute attente, la nature de l'alignement induit par une telle couche variait de façon réversible d'un alignement homéotrope à un alignement planaire en fonction de la température.

En effet, on choisit généralement des couches d'alignement planaire ou homéotrope classiques en fonction de leur stabilité en température. Les couches d'alignement standard connues jusqu'à présent donnent un alignement constant dans la gamme de températures d'utilisation qui est généralement imposée par le cristal liquide employé. De plus, les effets électro-optiques connus actuellement sont basés sur l'utilisation de couches d'alignement stables en température.

L'invention a donc pour objet principal l'utilisation de cette variation de la nature de l'alignement en fonction de la température dans une cellule à cristal liquide comportant une première lame, une seconde lame et un cadre de scellement interposé entre les deux lames pour former un volume étanche dans lequel est emprisonné un matériau optiquement actif comportant au moins un cristal liquide dont une caractéristique optique est susceptible d'être modifiée quand il est soumis à au moins une contrainte déterminée, au moins l'une desdites lames étant recouverte d'une couche d'alignement.

Conformément à l'invention, ladite couche d'alignement comprend un polymère appartenant à la famille des polymères halogénés solubles du type éthylénique substitué éthylène cycloaliphatique ou hétérocycloaliphatique.

Ainsi, en utilisant un matériau appartenant à la famille des polymères susmentionnés en tant que couche d'alignement, la cellule à cristal liquide peut être commutée de façon thermique entre deux états optiques par exemple transparent et opaque.

En d'autres termes, la nature de l'alignement du cristal liquide induit par une telle couche d'alignement varie de façon réversible de l'état homéotrope à l'état planaire en fonction de la température si bien qu'une cellule à cristal liquide selon l'invention présente une transparence qui varie en fonction de la température et peut être utilisée sans électrode ni circuit de commande particulier.

On notera également qu'une telle couche d'alignement, de part sa solubilité, peut être déposée de façon simple par exemple par trempage ou à la tournette.

Les polymères halogénés solubles définis plus haut peuvent être notamment des polymères fluorés, des polymères perfluorés, des polymères substitués cyclooxyaliphatique, et par exemple un copolymère de tétrafluoroéthylène avec le bis-2,2-trifluorométhyle-4,5-difluoro-1,3-dioxole.

En choisissant de tels polymères fluorés, on obtient un composé transparent qui est chimiquement et thermiquement stable et qui par conséquent est parfaitement adapté à une utilisation dans le domaine des cellules à cristal liquide.

Selon un mode de réalisation particulier de la cellule selon l'invention, la caractéristique optique du matériau optiquement actif est commandée par une contrainte thermique exercée sur la couche d'alignement.

Ainsi, la transparence de la cellule peut être commandée à la façon d'une cellule classique, le dispositif de commande consistant par exemple en une électrode de chauffage disposée à la surface interne ou externe des lames de la cellule ou en un faisceau laser infrarouge.

Selon un autre mode de réalisation, la caractéristique optique du matériau optiquement actif est commandée électriquement au moyen d'une tension appliquée entre des électrodes prévues sur chaque lame.

Dans ce dernier mode de réalisation, la cellule à cristal liquide peut être commutée de deux manières différentes, à savoir thermiquement lorsqu'aucune tension n'est appliquée entre les électrodes mais que la cellule à cristal liquide subit une élévation ou un abaissement de température au-delà ou en-deçà d'une température de transition (qui sera décrite plus en détail ci-après) et/ou électriquement en appliquant de façon classique une tension aux bornes des électrodes pour créer un champ électrique entre ces dernières.

Selon un autre mode de réalisation de l'invention, la cellule est commandée électriquement et présente une couche d'alignement comprenant un copolymère de tétrafluoroéthylène avec le bis-2,2 trifluorométhyle-4,5 difluoro-1,3-dioxole associé à un cristal liquide dont le rapport de sa constante élastique de flexion avec sa constante élastique de déformation en éventail ($K_3/K_1$) est supérieur ou égal à 1 à la température ambiante, la cellule présentant en outre un rapport $T_{HP}/T_{NI}$ inférieur ou égal à 1/3.

Grâce à cette combinaison de caractéristiques, on obtient une cellule à cristal liquide commandée électriquement dont la variation de sa tension de seuil ainsi que de sa tension de saturation avec la température est compensée si bien que les performances électro-optiques de la cellule sont maintenues à un niveau constant indépendamment des variations de la température et cela sans utiliser de circuit électronique spécifique.

Selon encore un autre mode de réalisation de l'invention, la cellule est commandée électriquement et présente une couche d'alignement comprenant un copolymère de tétrafluoroéthylène avec le bis-2,2 trifluorométhyle-4,5 difluoro-1,3-dioxole associé à un cristal liquide dont le rapport de sa constante élastique de flexion avec sa constante électrique de déformation en éventail ($K_3/K_1$) est inférieur ou égal à 2 à la température ambiante, la cellule présentant en outre un rapport $T_{HP}/T_{NI}$ supérieur ou égal à 2/3.

Cette combinaison de caractéristiques permet de réaliser aisément des cellules comportants des couches d'alignements présentant un alignement homéotrope incliné, notamment sans avoir à réaliser une évaporation oblique de $SiO_X$ suivie d'une traitement avec un agent surfactant comme cela est le cas actuellement, ces opérations étant particulièrement compliquées et mal adaptées à une production de masse.

La cellule selon l'invention peut être également avantageusement combinée à des moyens de commande comprenant un système apte à engendrer un faisceau laser pour former un dispositif d'affichage à commande thermique.

Bien entendu, de telles cellules à cristal liquide peuvent être utilisées soit en mode réflectif, soit en mode transmissif ou encore en mode transflectif, selon l'application désirée.

On notera que les cellules selon l'invention trouvent de nombreuses applications intéressantes, par exemple, comme verres de lunettes de soleil, comme vitres pour fenêtres ou encore comme simples indicateurs de température.

D'autres caractéristiques et avantages de l'invention apparaîtront à la lecture de la description qui suit de modes de réalisation non-limitatifs en liaison avec les dessins ci-joints parmi lesquels :

- la figure 1 est une coupe transversale d'un premier mode de réalisation d'une cellule à cristal liquide selon l'invention;
- la figure 2 représente des courbes montrant l'évolution de la transmission induite par la couche d'alignement selon l'invention en fonction de la température comparativement à l'évolution de la transmission induite par des couches d'alignement planaire et homéotrope classiques en fonction de la température;

- la figure 3 montre une coupe transversale d'un deuxième mode de réalisation d'une cellule à cristal liquide selon l'invention équipée d'un dispositif de commande thermique;
- la figure 4 montre une coupe transversale d'un troisième mode de réalisation d'une cellule à cristal liquide selon l'invention comprenant en outre un dispositif de commande électrique;
- la figure 5 représente une coupe d'un quatrième mode de réalisation d'une cellule à cristal liquide selon l'invention comprenant à la fois un dispositif de commande thermique et un dispositif de commande électrique;
- les figures 6 à 12 montrent des courbes illustrant l'influence de différents paramètres structurels d'une cellule selon l'invention sur la température de transition;
- la figure 12 montre des courbes illustrant l'influence de la température sur la tension de seuil et la tension de saturation de cellules de l'art antérieur respectivement de cellules selon l'invention; et
- la figure 13 montre schématiquement un dispositif d'affichage à commande thermique selon l'invention.

Dans la description qui va suivre, les mêmes éléments portent les mêmes références numériques sur les différentes figures.

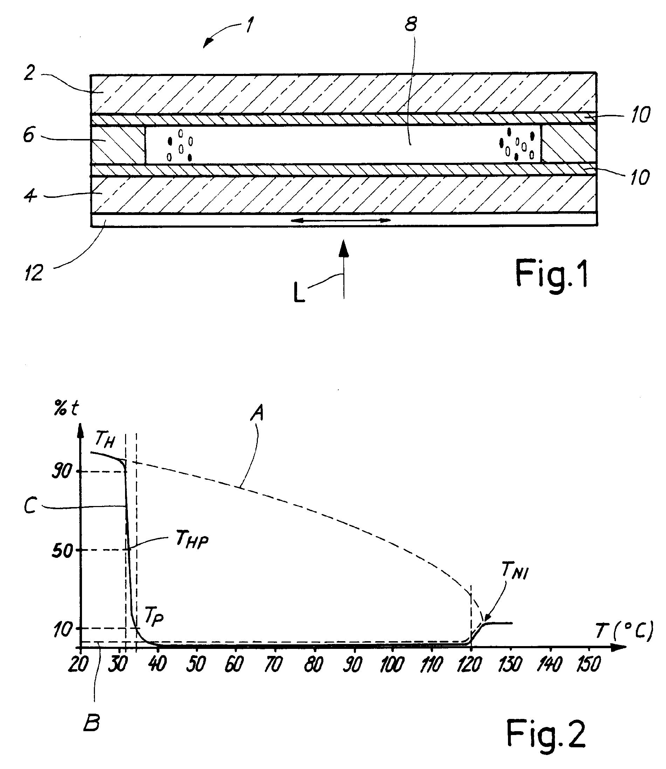

Nous allons tout d'abord décrire le principe de fonctionnement d'une cellule selon l'invention en se référant aux figures 1 et 2.

Sur la figure 1, on a représenté une cellule à cristal liquide du type Heilmeier comprenant un polariseur et fonctionnant en mode transmissif. La lumière a été représentée par la flèche L.

Bien entendu, l'invention n'est pas limitée aux cellules de ce type mais peut s'appliquer à tous les autres types de cellules à cristal liquide telles que les cellules à cristal liquide à changement de phase cholestérique-nématique ou nématique-cholestérique, les cellules à cristal liquide connues sous la dénomination anglaise "twisted nematic" ou "super twisted nematic" ou encore les cellules utilisant les effets de biréfringence contrôlée, toutes ces cellules pouvant fonctionner soit dans le mode transmissif, soit dans le mode réflectif ou encore dans le mode transflectif.

Sur la figure 1, on voit un premier mode de réalisation d'une cellule à cristal liquide selon l'invention désignée par la référence numérique générale 1. Cette cellule 1 comprend deux lames de verre, une avant 2 et l'autre arrière 4 transparentes, réunies entre elles par un cadre de scellement 6 définissant un volume étanche dans lequel est emprisonné un mélange 8 de cristal liquide. Les lames avant et arrière 2, 4 portent sur leur face interne une couche d'alignement 10 et la lame arrière 4 porte sur sa face extérieure un polariseur 12.

Sur les deux lames 2, 4 la couche d'alignement 10 est réalisée selon l'invention au moyen d'un polymère halogéné soluble du type éthylénique substitué éthylène cycloaliphatique ou hétérocycloaliphatique.

Dans la description des cellules selon l'invention qui suit, on a utilisé des polymères perfluorés éthyléniques substitués cyclooxylaliphatique pour réaliser une couche d'alignement 10. De tels polymères sont par exemple vendus sous la référence AF-1600 et AF-2400 par la société du Pont de Nemours et sont des copolymères de tétrafluoroéthylène (TFE) avec le bis-2,2-trifluorométhyle-4,5-difluoro-1,2-dioxole (perfluoro diméthyle dioxole, PDD).

Plus précisément, le polymère AF-1600 est un copolymère comprenant sensiblement 60 à 70 % de PDD et 30 à 40 % de TFE et le polymère AF-2400 est un copolymère comprenant 85 à 95 % de PDD et 5 à 15 % de TFE.

Bien entendu, la couche d'alignement 10 de la cellule selon l'invention n'est pas limitée aux deux copolymères de PDD et TFE cités plus haut, et peut être réalisée en utilisant d'autres copolymères de PDD et TFE dans d'autres proportions.

On pourrait également utiliser d'autres copolymères de PDD et des monomères tels que ceux décrits dans le brevet US-4 754 009, ou encore des homopolymères de PDD. Dans le même ordre d'idées, des copolymères de monomères halogénés éthyléniques substitués hétérocycloaliphatique avec des monomères tels que ceux décrits dans le brevet US-4 754 009 peuvent être aussi utilisés.

Selon une autre variante, la couche d'alignement de la cellule selon l'invention pourra être formée d'un mélange comprenant un des polymères, dit premier polymère, cités ci-dessus, avec un second polymère soluble dans le même solvant, ou encore avec une dispersion d'un second polymère.

A titre d'exemple, les polymères AF-1600 et AF-2400 solubles dans le même solvant, en l'occurence dans des solvants fluorés, peuvent être aisément mélangés dans des proportions dans leur limite de solubilité pour former une couche d'alignement homogène.

Lorsque le second polymère n'est pas soluble dans le solvant utilisé pour dissoudre le premier polymère, ce second polymère peut être avantageusement dispersé dans celui-ci. Dans ce cas, l'indice de réfraction du second polymère est sensiblement identique à celui du premier polymère si l'on souhaite obtenir une couche d'alignement homogène et transparente et peut être différente de celui du premier polymère si l'on souhaite

EP 0 476 527 B1

par exemple obtenir une couche diffusante.

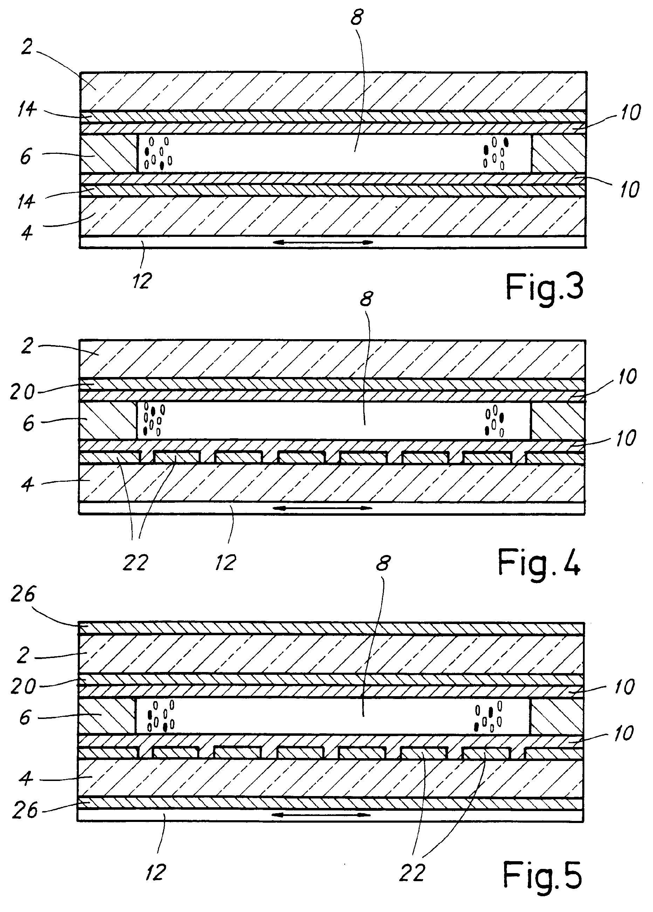

La couche d'alignement 10 été déposée, séchée et brossée dans la même direction sur les deux plaques, et l'axe de polarisation du polariseur 12 est parallèle à la direction du brossage. Par ailleurs, le mélange de cristal liquide utilisé dans cet exemple est un mélange dichroïque à anisotropie diélectrique négative vendu sous la référence ZLI-4530 par la firme Merck. Ce couple couche d'alignement AF-1600 respectivement AF-2400, mélange dichroïque ZLI-4530 sera également utilisé dans les différents modes de réalisation d'une cellule selon l'invention qui seront décrits en liaison avec les figures 3 à 5.

On notera que le dessin ne reflète par l'épaisseur exacte de l'ensemble ainsi formé, cette épaisseur étant fortement exagérée pour plus de clarté. Pour fixer les idées, la distance entre les deux couches d'alignement est de l'ordre de 5 à 9 micromètres et l'épaisseur de la couche d'alignement est de l'ordre de quelques centaines d'Angströms. Toutefois, on notera à ce propos que l'on peut réaliser selon une autre variante de l'invention (non représentée) des couches d'alignement 10 d'une épaisseur telle que ces couches s'autosupportent et que les lames 2 et 4 peuvent être supprimées, les lames étants réalisées par la couche d'alignement elle-même.

En se référant maintenant à la figure 2, les courbes A, B représentent respectivement l'évolution en fonction de la température T de la transmission t de la lumière (indiquée en %) à travers une cellule à cristal liquide connue comportant sur chacune de ses lames une couche d'alignement homéotrope standard et à travers une cellule à cristal liquide connue comportant sur chacune de ses lames une couche d'alignement planaire standard.

Les couches d'alignement homéotrope sont réalisées au moyen d'octadécyldiméthyl [3-(triméthoxysilyl)-propyl] ammoniumchloride, plus connu sous l'abréviation DMOAP et commercialisé par la société Petrach USA, et les couches d'alignement planaire sont réalisées au moyen d'un polyimide frotté tel que le polyimide PI-2545 vendu par la société Du Pont de Nemours.

La courbe C représente l'évolution en fonction de la température T de la transmission t de la lumière à travers la cellule à cristal liquide 1 selon l'invention.

Dans ces trois exemples, les cellules à cristal liquide ne comportent aucune électrode de commande.

On constate, d'après la courbe A, que la transmission t de la cellule correspondante diminue progressivement lorsque la température augmente et cela jusqu'à une température dite $T_{NI}$ correspondant à la température de transformation du cristal liquide de sa phase nématique à sa phase liquide isotrope. Cette diminution progressive de la transmission résulte du fait que l'ordre relatif des molécules de cristal liquide et des molécules de colorant dichroïque diminue sensiblement en raison de l'agitation thermique de ces dernières.

D'après la courbe B qui concerne une cellule comportant deux couches d'alignement planaire standards, on constate que la transmission t, pratiquement nulle à la température ambiante, ne varie que très peu en fonction de la température et augmente très légèrement avant la température $T_{NI}$.

Comme cela ressort de la courbe C, le comportement en transmission d'une cellule à cristal liquide selon l'invention en fonction de la température est radicalement différent du comportement en transmission des cellules à cristal liquide comportant des couches d'alignement homéotrope ou planaire standard.

En effet, si l'on désigne par $T_H$ la température à laquelle la cellule transmet 90 % de la lumière reçue, par $T_{HP}$ la température à laquelle la cellule transmet 50 % de la lumière reçue et par TP la température à laquelle la cellule transmet 10 % de la lumière reçue, on constate qu'il y a une transition marquée de l'alignement homéotrope ou quasi homéotrope à l'alignement planaire ou quasi planaire, et que cette transition se réalise dans un intervalle de température très faible. Cet intervalle de température dépend de divers paramètres qui seront décrits plus en détails ci-après.

On entend par alignement quasi homéotrope un alignement homéotrope comportant un faible angle d'inclinaison qui est donné lors de la préparation par un brossage de la couche de sorte que le basculement des molécules se fasse dans une direction homogène. Toutefois il faut préciser qu'au dessous de $T_H$, l'angle d'inclinaison diminue lorsque la température baisse.

On entend par alignement quasi planaire un alignement planaire comportant un faible angle d'inclinaison qui est donné également par brossage de la couche au moment de sa préparation. Cet angle d'inclinaison tend à diminuer lorsque, au dessus de $T_p$, la température augmente.

Dans l'exemple représenté, la transmission diminue progressivement jusqu'à la température $T_H$ à partir de laquelle l'alignement du cristal liquide encore homéotrope ou quasi homéotrope se transforme brusquement pour devenir planaire ou quasi planaire à la température $T_p$. Un tel alignement persiste alors jusqu'à la température $T_{NI}$.

Cet effet est réversible si bien qu'en refroidissant la cellule selon l'invention, on retrouve la séquence inverse et l'on passe de l'état isotrope lorsque la température est supérieure à $T_{NI}$ à un alignement planaire ou quasi planaire lorsque la cellule est à une température comprise entre $T_p$ et $T_{NI}$, puis à un alignement homéotrope ou quasi homéotrope lorsque la cellule est à une température inférieure à $T_H$. Ce passage de l'état isotrope à l'alignement homéotrope ou quasi homéotrope en passant par un état intermédiaire correspondant à

5

un alignement planaire ou quasi planaire se fait en parcourant sensiblement la même courbe que lors du chauffage. Il peut apparaître une faible hystérèse qui dépend de la vitesse de chauffage respectivement de refroidissement de la cellule selon l'invention.

On constate donc que l'alignement du cristal liquide induit par les couches d'alignement homéotrope standard et planaire standard passe de façon réversible directement de l'alignement considéré à l'état isotrope lors d'une élévation au-dessus respectivement d'un abaissement au-dessous de la température $T_{NI}$.

En revanche, l'alignement du cristal liquide induit par la couche d'alignement de la cellule selon l'invention passe successivement et de façon réversible d'un alignement homéotrope ou quasi homéotrope pour une température inférieure à la température $T_H$ à un alignement planaire ou quasi planaire pour une température supérieure à la température $T_p$, puis à l'état isotrope lorsque la température est supérieure à la température $T_{NI}$. L'intervalle de température compris entre $T_H$ et $T_p$ définit la zone de transition réversible homéotrope - planaire.

Dans l'exemple illustré par les figures 1 et 2, le cristal liquide présente une anisotropie diélectrique négative, mais il est bien entendu que l'effet thermo-optique décrit ci-dessus fonctionne également avec des mélanges de cristal liquide présentant une anisotropie diélectrique positive.

Ce phénomène peut s'expliquer par le fait qu'une augmentation ou une diminution de la température, entraîne un changement d'orientation et/ou de conformation des molécules du cycle aliphatique du polymère formant la couche d'alignement, en l'occurence du PDD , ce changement modifiant les forces d'interaction cristal liquide - polymère qui à leur tour influencent l'alignement des molécules du cristal liquide se trouvant au voisinage de la surface du polymère.

Ces forces d'interaction dépendent du couple polymère - cristal liquide utilisé et nous verrons par la suite qu'en combinant de façon astucieuse des couches d'alignement de la cellule selon l'invention et différents mélanges de cristal liquide, il est possible de choisir une température $T_{HP}$ déterminée en fonction de l'application souhaitée.

Le premier mode de réalisation selon l'invention décrit à la figure 1 trouve des applications particulièrement intéressantes dans le domaine de l'automobile, par exemple pour réaliser la partie vitrée du toit d'une automobile s'obscurcissant en fonction de la température. Une telle cellule peut être également utilisée comme indicateur de la température associé par exemple à un détecteur optique pour signaler le dépassement d'une température de consigne.

En se référant à la figure 3, on voit un deuxième mode de réalisation d'une cellule à cristal liquide selon l'invention pouvant être commandée thermiquement.

Le dispositif de commande associé à cette cellule est, dans ce cas, formé par deux électrodes de chauffage 14. Chaque électrode 14 s'étend sur la totalité de la surface interne d'une lame 2, 4 et est disposée entre cette face interne et la couche d'alignement 10 selon l'invention. Cette électrode de chauffage est transparente et est réalisée avantageusement en un oxyde d'indium dopé (ITO) présentant une conductivité élevée. Chaque électrode 14 est reliée par l'intermédiaire de deux conducteurs à une source de tension continue. Ainsi, lorsque un courant circule dans chaque électrode 14, il se produit un chauffage par effet Joule de cette dernière et, par conduction, de la couche d'alignement selon l'invention. De cette façon, il est possible de faire varier de façon réversible l'alignement du cristal liquide tel que cela a été décrit en liaison avec les figures 1 et 2 et ainsi d'obtenir en fonction d'un signal de commande thermique un obscurcissement ou un éclaircissement de la cellule.

Contrairement au premier mode de réalisation d'une cellule selon l'invention dont le passage réversible entre les états transparent et opaque est dépendante de la température environnante, une cellule selon le deuxième mode de réalisation de l'invention peut être commandée indépendamment de la température environnante. Une telle cellule peut être utilisée avantageusement dans tout dispositif n'utilisant que deux états optiques déterminés tel qu'une valve optique .

En se référant maintenant à la figure 4, on a représenté un troisième mode de réalisation d'une cellule à cristal liquide selon l'invention, qui est, d'une part, sensible à la température et qui, d'autre part, peut être commandée électriquement.

Dans ce mode de réalisation, la lame 2 porte une électrode 20 s'étendant sur la totalité de sa face interne, tandis que la lame 4 porte un ensemble d'électrodes 22 isolées électriquement les unes des autres et définissant un motif souhaité. Les électrodes 20, 22, sont optiquement transparentes et sont réalisées avantageusement en oxyde d'indium dopé. Les faces internes des lames 2 et 4, ainsi que les électrodes 20, 22 qu'elles portent sont recouvertes de la couche d'alignement 10 décrite en liaison avec la figure 1. Bien entendu, les électrodes 20, 22 sont reliées de façon appropriée à un circuit de commande (non représenté) destiné à créer un champ électrique entre ces dernières et à commander un basculement des molécules du mélange de cristal liquide pour modifier l'état optique de la cellule.

Une telle cellule à cristal liquide présente donc, d'une part, un état optique dépendant de la température extérieure et fonctionne par conséquent comme la cellule à cristal liquide décrite en liaison avec les figures 1 et 2 et, d'autre part, un état optique pouvant être commandé électriquement par l'application d'un champ électrique entre les électrodes. On comprend donc aisément qu'une telle combinaison permet d'élargir les applications potentielles d'une telle cellule.

Toutefois, le fonctionnement de la cellule de la figure 4 est différent selon le signe de l'anisotropie diélectrique du cristal liquide.

Examinons tout d'abord le fonctionnement d'une telle cellule comprenant un mélange dichroïque à anisotropie diélectrique négative.

Supposons que la cellule à cristal liquide soit initialement à une température inférieure à la température $T_H$. L'alignement du cristal liquide est alors homéotrope ou quasi homéotrope et l'état optique de la cellule est transparent. Pour passer de cet état optique transparent à un état optique opaque, il est alors possible, soit d'augmenter la température de la cellule au-delà de la température $T_p$ de sorte que la couche d'alignement induise un alignement planaire ou quasi planaire des molécules du mélange, soit d'appliquer un champ électrique entre les électrodes afin de modifier l'orientation de l'alignement des molécules du mélange de sorte que ces dernières soient perpendiculaires au champ. Pour passer de l'état opaque à l'état transparent, il suffit, dans le premier cas, de refroidir la cellule de cristal liquide à une température inférieure à $T_H$ et, dans le deuxième cas, de cesser d'appliquer le champ électrique.

Lorsque le cristal liquide présente une anisotropie diélectrique positive, le passage de l'état optique transparent à l'état optique opaque ne peut être réalisé que par une augmentation de la température au-delà de la température $T_p$ de la même façon qu'avec un cristal liquide présentant une anisotropie diélectrique négative. Toutefois, il est alors possible, dans ce cas, de passer de l'état optique opaque à l'état optique transparent sans refroidir la cellule, en appliquant un champ électrique afin de modifier l'orientation des molécules du mélange et de la rendre parallèle au champ électrique.

Une telle combinaison de ces deux effets est particulièrement intéressante dans certaines applications telles que par exemple dans le cas où cette cellule équipe la partie vitrée d'une fenêtre qui s'est obscurcie par suite d'une température élevée mais que l'on désire éclaircir sans attendre que la température de celle-ci se soit abaissée en dessous de la température $T_H$.

A la figure 5, on a représenté un quatrième mode de réalisation d'une cellule selon l'invention dont l'état optique varie en fonction de la température extérieure et peut en outre être commandé thermiquement et/ou électriquement.

Cette cellule présente une structure identique à celle de la cellule à cristal liquide décrite en liaison avec la figure 4 à ceci près que les lames 2, 4 portent en outre sur leur face externe une électrode 26 de chauffage du type de celle décrite en liaison avec la figure 3.

On notera que les cellules selon l'invention et notamment celles qui viennent d'être décrites en liaison avec les figures 1, 3, 4 et 5 peuvent comprendre une substance absorbant dans l'infrarouge. Cette substance peut prendre la forme d'une couche (non représentée) disposée par exemple entre une lame et la couche d'alignement de la cellule selon l'invention ou être directement mélangée avec la couche d'alignement ou encore dissoute dans le cristal liquide.

Ces substances peuvent être choisies parmi les colorants absorbant dans l'infrarouge tels que les colorants vendus sous la référence IRG-022 et CY-9 par la société Nippon Kayaku ou celui vendu sous la référence PA-1006 par la société Mitsui.

L'utilisation de ces substances absorbant dans l'infrarouge permet d'augmenter la vitesse de commutation des cellules selon l'invention en rendant plus efficace la transformation de l'énergie des radiations infrarouges, contenues par exemple dans le rayonnement solaire, en énergie thermique.

Bien que dans les quatre modes de réalisation d'une cellule à cristal liquide selon l'invention qui viennent d'être décrits, la couche d'alignement s'étende sur la totalité de la surface des lames, il est possible dans chacun de ces modes de réalisation de déposer cette couche d'alignement selon des configurations déterminées pour afficher, par exemple, des messages de consigne. Ce message de consigne peut indiquer le dépassement d'une température déterminée en affichant cette température directement sur cette cellule.

Il est également important de rappeler que la description qui précède à été faite dans le cadre d'une cellule du type Heilmeier présentant un état optique transparent lorsque l'alignement du cristal liquide est homéotrope et un état optique opaque lorsque l'alignement du cristal liquide est planaire.

Il va de soi que le phénomène de transition réversible d'un alignement homéotrope à un alignement planaire peut être utilisé en combinaison avec d'autres effets optiques ou électro-optiques connus ("twisted-nematic", biréfringence contrôlée, etc...).

Dans les exemples de réalisation de cellules à cristal liquide selon l'invention décrits en liaison avec les figures 1 à 5, une couche d'alignement de même nature se trouve sur les deux faces internes des lames de la cellule et il est question d'un couple "cristal liquide - couche d'alignement" présentant une température de transition déterminée ($T_{HP}$ cf figure 2).

Selon les besoins, il peut être nécessaire de réaliser des cellules à cristal liquide présentant différentes températures de transition. Or, on a constaté qu'il était possible d'ajuster la température de transition $T_{HP}$ en faisant varier les paramètres suivants :
- la nature de la couche d'alignement selon l'invention
- l'épaisseur de la couche l'alignement selon l'invention
- l'utilisation de sous-couches avec la couche d'alignement selon l'invention
- la nature du cristal liquide ou des mélanges utilisés en combinaison avec une couche d'alignement selon l'invention
- la combinaison des couches d'alignement selon l'invention avec des couches d'alignement planaire ou homéotrope standards.
- la dispersion d'un autre matériau dans la couche d'alignement selon l'invention.

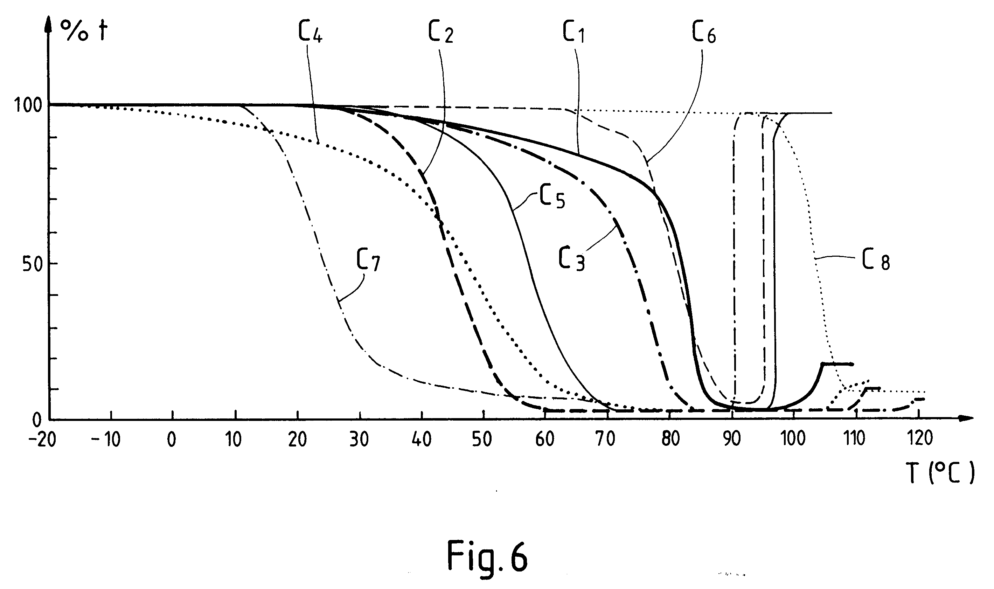

L'influence de ces différents paramètres est illustrée par les courbes des figures 6 à 11.

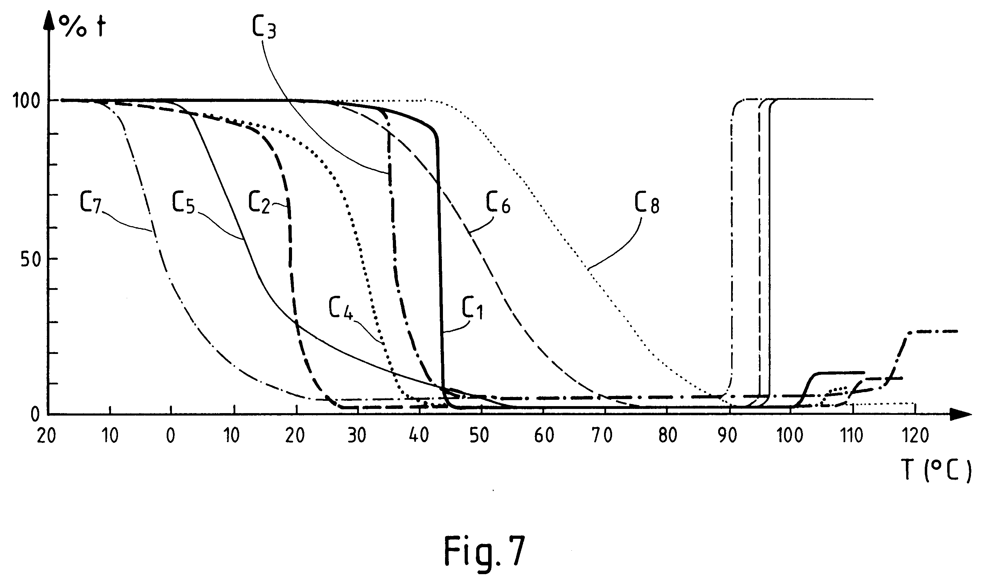

Sur les figures 6 et 7, on a montré l'influence du couple "cristal liquide - couche d'alignement" selon l'invention sur la température de transition $T_{HP}$.

Pour cette illustration, on a réalisé deux cellules selon l'invention dont chaque lame comporte une couche d'alignement réalisée respectivement en un polymère vendu sous la référence AF-1600 et AF-2400 par la société Du Pont de Nemours. On a utilisé différents mélanges de cristal liquide dans des cellules de type "twisted nématic" et dichroïque. Chaque mélange de cristal liquide est désigné par la référence sous laquelle il est vendu par la société Merck et est associée à un numéro de courbe. Les températures de transition obtenues avec chacun de ces mélanges alignés sur les couches AF-1600, AF-2400 ont été consignées dans le tableau (I), ci-dessous :

## TABLEAU (I)

| Courbe | Cristal liquide | $T_{HP}$(°C) AF-1600 Cf figure 6 | $T_{HP}$(°C) AF-2400 Cf figure 7 |
|---|---|---|---|
| C1 | ZLI 4282 | 81,5 | 43 |
| C2 | " 4480 | 45 | 19,5 |
| C3 | " 4530 | 74 | 36,5 |
| C4 | " 3284 | 46,5 | 30,5 |
| C5 | " 4245 000 | 58 | 13 |
| C6 | " 3239 | 81 | 50 |
| C7 | " 3412 000 | 24 | – 2 |
| C8 | " 4268 | 104 | 64 |

Les courbes C1 à C4 correspondent à des mélanges de cristal liquide comprenant des colorants dichroïques utilisés dans des cellules fonctionnant en mode Heilmeier et les courbes C5 à C8 correspondent à des mélanges de cristal liquide ne comprenant pas de colorant et utilisés dans des cellules fonctionnant en mode "twisted nématic" avec deux polariseurs dont les axes de polarisation sont parallèles.

Ces courbes montrent clairement que la température de transition $T_{HP}$ peut être ajustée dans une large gamme de température en fonction de la nature du cristal liquide et de la couche d'alignement utilisée avec celui-ci.

On remarque qu'avec la couche d'alignement AF-1600, on peut choisir des températures de transition $T_{HP}$ dans une gamme de température variant sensiblement de la température ambiante (24°C) à 104°C.

Avec la couche d'alignement AF-2400, les températures de transition sont, avec un même cristal liquide, plus basses qu'avec la couche d'alignement AF-1600 et varient de - 2°C à 65°C. On constate que, pour un cristal liquide donné, les plages de températures dans lesquelles l'alignement est planaire sont plus larges avec la couche d'alignement AF-2400.

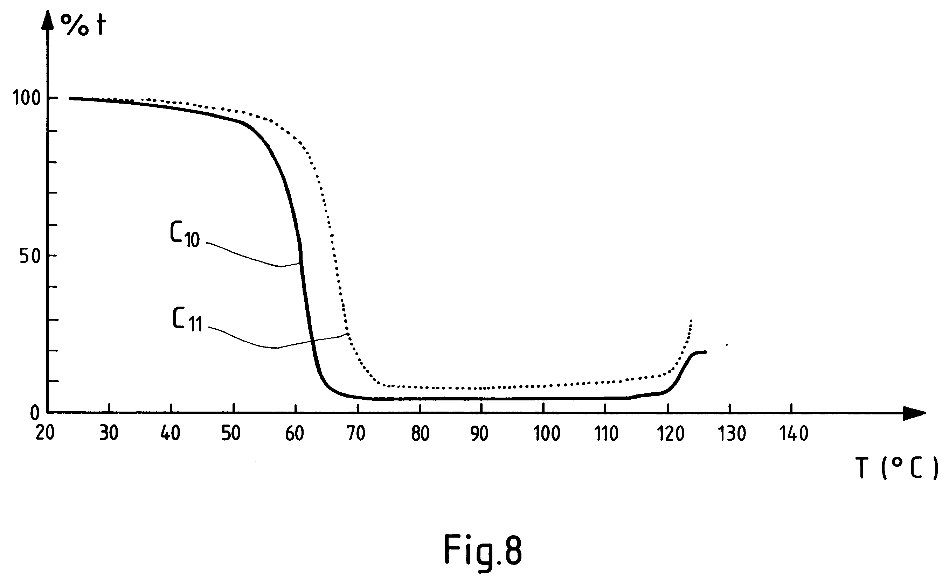

La figure 8 montre l'influence de l'épaisseur de la couche d'alignement sur la température de transition $T_{HP}$. Pour illustrer cette influence, on a utilisé deux épaisseurs d'une couche d'alignement AF-1600 avec un mélange de cristal liquide dichroïque ZLI 4530 en mode Heilmeier. Les courbes C10, C11 correspondent respectivement à une épaisseur de la couche d'alignement AF-1600 de 80 nm et 60 nm.

Il résulte de ces courbes que les températures de transition $T_{HP}$ varient dans une gamme assez faible (de 5 à 10°C) et une transition très brusque de l'alignement homéotrope vers l'alignement planaire est observée avec la couche d'alignement.

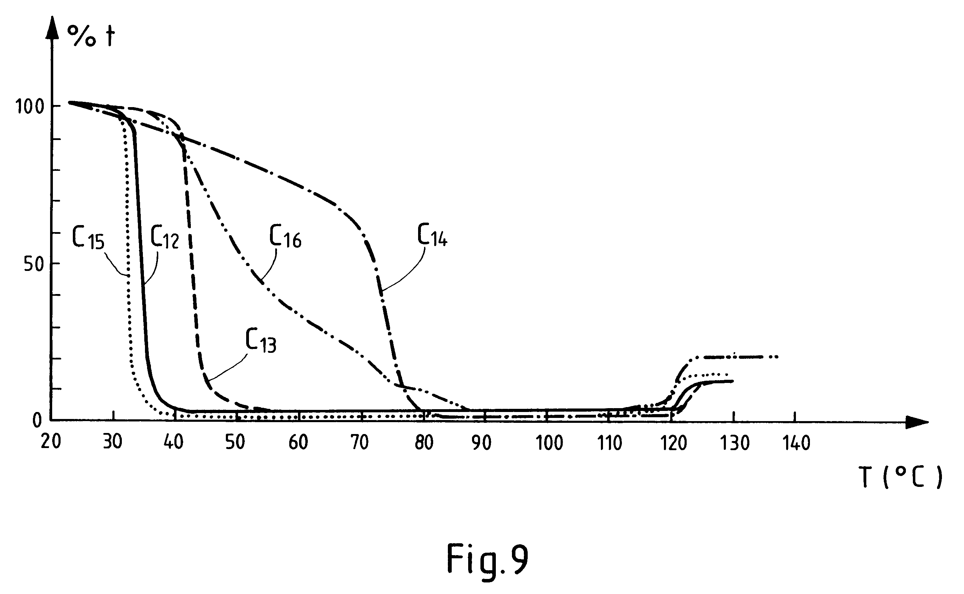

Sur la figure 9, on a montré l'influence de l'utilisation d'une sous-couche avec une couche d'alignement principale sur la température de transition $T_{HP}$. Des essais ont été réalisés avec le mélange de cristal liquide dichroïque ZLI 4530 en mode Heilmeier, et ce dernier a été aligné sur différentes combinaisons de couches d'alignement AF-1600 et AF-2400. Les courbes C12 et C13 correspondent respectivement à l'utilisation dans une cellule d'une couche d'alignement AF-2400 et AF-1600 sur respectivement une sous-couche d'alignement AF-1600 et AF-2400. Les courbes C14 et C15 correspondent respectivement à l'utilisation de couches d'alignement AF-2400 et AF-1600 seules. Enfin, la courbe C16 correspond à l'utilisation d'une couche d'alignement AF-2400 sur une lame, et à l'utilisation d'une couche d'alignement AF-1600 sur l'autre lame de la cellule. Les résultats obtenus sont consignés dans le tableau (II) ci-dessous :

## TABLEAU (II)

| Courbe | Couche d'alignement | Sous couche | $T_{HP}(°C)$ |
|---|---|---|---|
| C12 | AF-2400 | AF-1600 | 34,5 |
| C13 | AF-1600 | AF-2400 | 42 |
| C14 | AF-1600 | Rien | 72 |
| C15 | AF-2400 | Rien | 32,5 |
| C16 | AF-1600 / AF-2400 | Rien | 51,5 |

On remarque que l'utilisation de couches d'alignement différentes sur les deux lames (courbe C16) permet d'obtenir des températures de transitions intermédiaires par rapport aux températures de transition obtenues en utilisant les mêmes couches d'alignement sur les deux lames. Par ailleurs, on remarque que ce type de structure d'alignement asymétrique rend la courbe de transmission C16 de la cellule selon l'invention plus graduelle que lorsque l'on utilise une couche d'alignement AF-1600 ou AF-2400 seule ou avec une sous-couche. Par ailleurs on voit que l'on peut ajuster la température de transition $T_{HP}$ en utilisant une couche d'alignement avec une sous-couche (cf courbes C12 et C13).

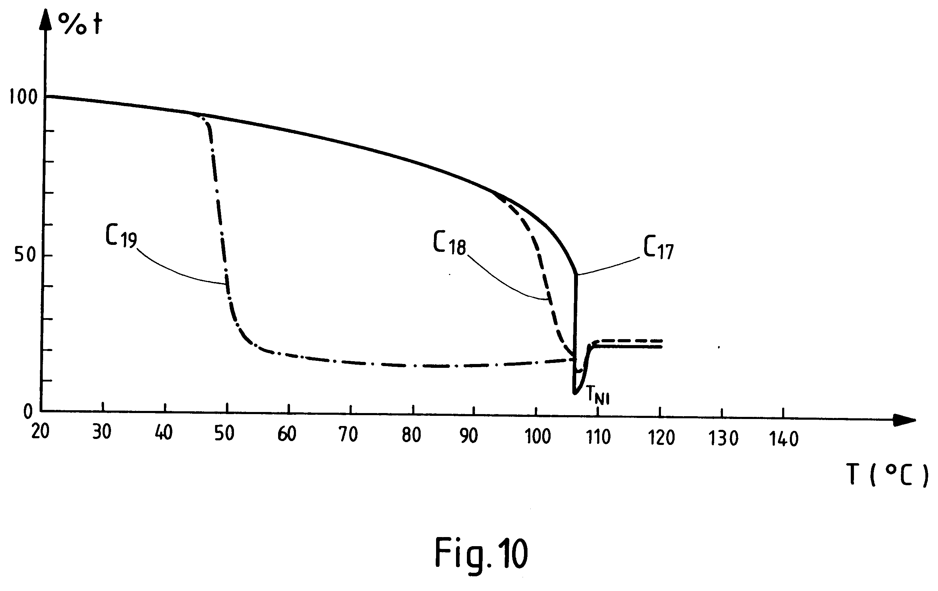

La figure 10 montre l'influence de l'utilisation des couches d'alignement selon l'invention en combinaison avec des couches d'alignement homéotrope classiques sur la température de transition $T_{HP}$.

La courbe C17 représente l'évolution en fonction de la température de la transparence d'une cellule comprenant sur ses deux lames une couche d'alignement homéotrope classique. Les courbes C18 et C19 représentent l'évolution en fonction de la température de la transparence d'une cellule comportant sur une lame une couche d'alignement homéotrope classique et sur l'autre lame une couche d'alignement selon l'invention réalisée respectivement en polymère fluoré soluble AF-1600 et AF-2400.

Comme on peut le voir sur cette figure, les couches d'alignement AF-1600 et AF-2400, combinées avec une couche d'alignement homéotrope standard, donnent toujours une transition réversible homéotrope - planaire. Toutefois, on remarque dans ce cas que les températures de transition $T_{HP}$ sont décalées vers des valeurs plus élevées si on les compare à des cellules ayant les couches AF-1600 ou AF-2400 sur les deux lames (cf tableau I et II). En outre, on note que la courbe C18 suit la courbe C17 jusqu'au voisinage de la température $T_{NI}$ de sorte qu'il est aisé, par le brossage de la couche d'alignement selon l'invention, d'obtenir de cette manière un alignement homéotrope incliné des molécules du mélange de cristal liquide dans la gamme de température se trouvant entre la température de cristallisation du mélange et la température de transformation réversible homéotrope - planaire. De façon avantageuse, on peut donc réaliser une cellule comportant un alignement homéotrope incliné sans utiliser d'appareillage compliqué et coûteux puisque la couche d'alignement selon l'invention peut être déposée en solution comme cela est décrit plus en détail ci-après.

Bien entendu, une combinaison d'une couche d'alignement selon l'invention avec une couche d'alignement planaire classique peut également être réalisée. Toutefois, on obtient dans ce cas un alignement graduel des molécules du mélange entre les deux lames qui alignent respectivement de façon homéotrope ou homéotrope incliné et planaire. L'alignement au centre de la cellule est donc moyen et l'angle d'inclinaison y est de l'ordre de 45°.

9

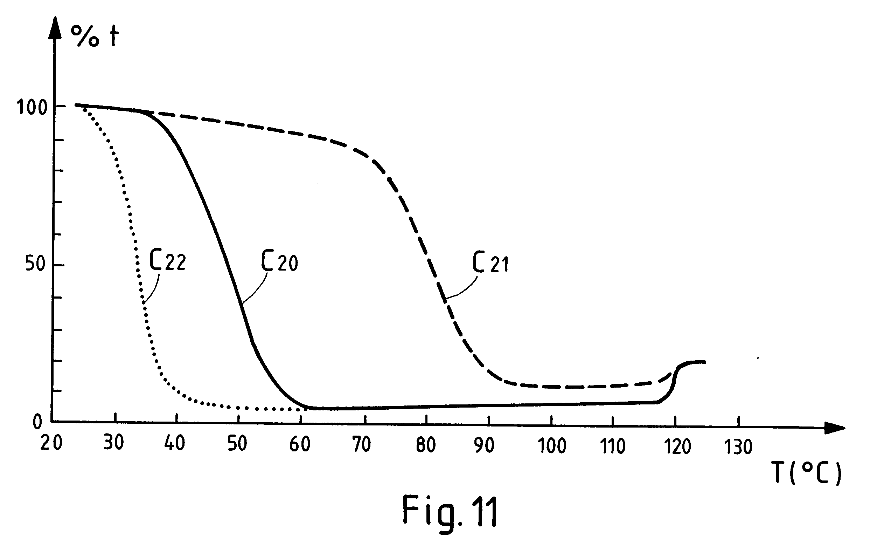

La figure 11 montre l'influence de l'utilisation d'une couche d'alignement formée d'un mélange de deux polymères halogènes du type éthylénique substitué éthylène hétérocycloaliphatique et respectivement d'un tel polymère avec une dispersion d'un second polymère. La courbe C20 correspond à un mélange comprenant 25 % de AF-1600 et 75 % de AF-2400 tandis que les courbes C21, C22 correspondent chacune à un mélange d'AF-1600, respectivement d'AF-2400 avec du polytétrafluoroéthylène (PTFE) dispersé (10 % en poids). Les résultats obtenus sont consignés dans le tableau (III) ci-dessous :

## TABLEAU (III)

| Courbe | Couche d'alignement | $T_{HP}$(°C) |
|---|---|---|
| C20 | AF-1600, AF-2400 | 48 |
| C21 | AF-1600, PTFE | 81 |
| C22 | AF-2400, PTFE | 33 |

On constate à partir de la courbe C20 que la température de transition HP ainsi que la pente de la courbe de transmission se situe entre les courbes $C_3$ des figures 6 et 7 correspondant respectivement aux couches d'alignement AF-1600 et AF-2400 utilisées seules de sorte qu'un ajustement de la température de transition peut être aisément choisie entre les $T_{HP}$ de chacune des deux couches d'alignement mélangées.

On remarque également à partir des courbes C21 et C22 que l'utilisation d'une couche d'alignement selon l'invention avec une dispersion d'un autre polymère, rend la transmission de la cellule plus graduelle en fonction de la température et diminue sensiblement la température de transition $T_{HP}$ par rapport aux cellules ne comportant qu'une couche d'alignement selon l'invention. (cf. courbes C3 des figures 6 et 7).

On constate en résumé que l'on peut choisir une température de transition déterminée en faisant varier indépendamment ou simultanément les paramètres que l'on vient de décrire.

Comme cela est bien connu de l'homme de l'art, de fortes variations de températures entraînant des variations de la tension de seuil (tension correspondant à 10 % de transmission) et de la tension de saturation (tension correspondant à 90 % de transmission) des cellules à cristal liquide qu'il convient de supprimer.

Il existe dans l'art antérieur différents moyens pour compenser cette variation, tels qu'une compensation électronique, une compensation par dopage du cristal liquide au moyen d'agents chiraux dont le pas de leur hélice varie en sens opposé avec la température. Toutefois, ces moyens sont, soit compliqués et chers comme les moyens électroniques, soit diminuent le taux de multiplexage de la cellule.

Or on a constaté qu'une cellule selon l'invention muni d'électrodes et associée à un cristal liquide dont le rapport de sa constante élastique de flexion $K_3$ avec sa constante de déformation en éventail $K_1$ est supérieur ou égal à 1 à la température ambiante, c'est-à-dire autour de 20°C, et qui présente un rapport $T_{HP}/T_{NI}$ inférieur ou égal à 1/3 compense automatiquement, au moyen de la couche d'alignement, les variations de la tension de seuil et de saturation avec la température. De manière préférée, le rapport $K_3/K_1$ est supérieur ou égal à 1,5.

En effet, alors que pour des cellules comportant des couches d'alignement standard, les pentes des courbes de tension de seuil et de tension de saturation en fonction de la température sont négatives, celles des cellules selon l'invention associées à un cristal liquide de $K_3/K_1 \geqq 1$ à la température ambiante et de rapport $T_{HP}/T_{NI} \leqq$ à 1/3 sont sensiblement nulles dans une large gamme de température.

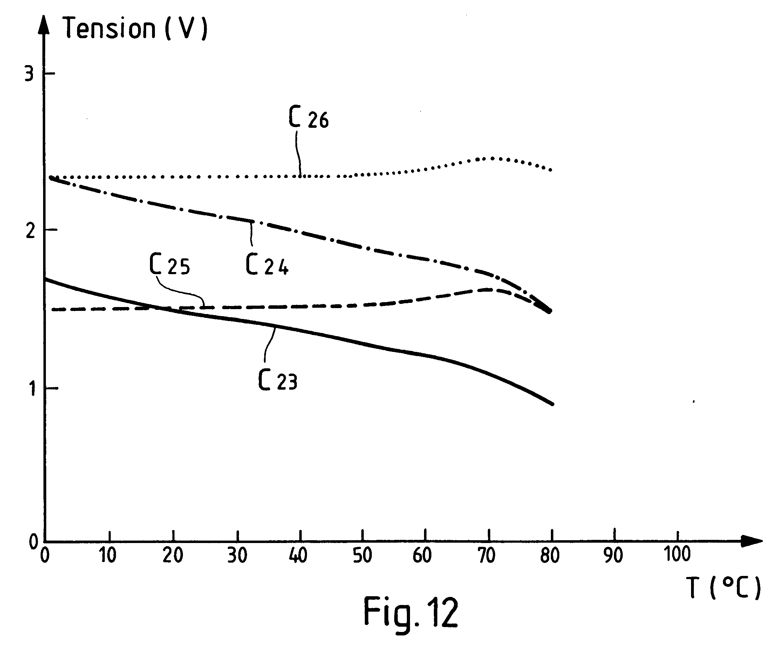

A la figure 12, on a représenté des courbes montrant respectivement le comportement de la tension de seuil et de la tension de saturation de cellules standard et de cellules selon l'invention en fonction de la température.

Dans l'exemple illustré, les courbes C23, C24 correspondent aux résultats obtenus avec une cellule standard (couche d'alignement en polyimide) pour la tension de seuil C23 et pour la tension de saturation C24, et les courbes C25, C26 correspondent aux résultats obtenus avec une cellule selon l'invention pour la tension de seuil C25 et pour la tension de saturation C26. Le cristal liquide utilisé dans les deux cellules est un cristal liquide vendu par la société Merck sous la référence ZLI 3201-000 présentant un $K_3/K_1$ = 1,8 et le rapport $T_{HP}/T_{NI}$ de la cellule selon l'invention est inférieur à -0,25.

Il ressort clairement de ces courbes que les tensions de seuil et de saturation des cellules selon l'invention sont constantes entre 0 et 75°C tandis que ces mêmes tensions diminuent constamment dans cette gamme de température avec des cellules standard.

Comme cela a déjà été mentionné plus haut, il est difficile voire impossible pour l'homme de l'art de réaliser des cellules comportant des couches d'alignement homéotrope inclinées ou faiblement inclinées sans mettre en oeuvre des moyens techniques chers et complexes.

Or, on s'est aperçu qu'une cellule selon l'invention comportant des électrodes et associée à un cristal liquide dont le rapport de sa constante élastique de flexion $K_3$ avec sa constante de déformation en éventail $K_3/K_1$ est inférieure ou égale à 2, à la température ambiante, la cellule présentant un rapport $T_{HP}/T_{NI}$ supérieur ou égal à 2/3, présente un alignement homéotrope incliné.

Des exemples de cellules selon l'invention qui présentent un alignement homéotrope à la température ambiante sont consignées dans le tableau (IV) ci-après :

### TABLEAU (IV)

| Cristal liquide | Couche d'alignement | $K_3/K_1$ | $T_{HP}$(°C) | Angle (°) d'inclinaison |
|---|---|---|---|---|
| ZLI 3201-100 | /AF-1600 | 1,26 | 0,98 | ∿ 1 |
| ZLI 3244 | /AF-1600 | 1,22 | 0,92 | ∿ 1 |
| ZLI 2248 | /AF-2400 | 1,13 | 0,87 | ∿ 1 |
| ZLI 3807 | /AF-2400 | 0,95 | 0,99 | ∿ 1 |

Il ressort de ce tableau que l'on peut aisément obtenir avec de telles cellules selon l'invention des alignements homéotropes inclinés. On notera également que le rapport $T_{HP}/T_{NI}$ de ces cellules est très proche de 1 si bien que le domaine de température dans lequel l'alignement homéotrope incliné est obtenu est large.

De préférence, le rapport $K_3/K_1$ est inférieur ou égal à 1,5.

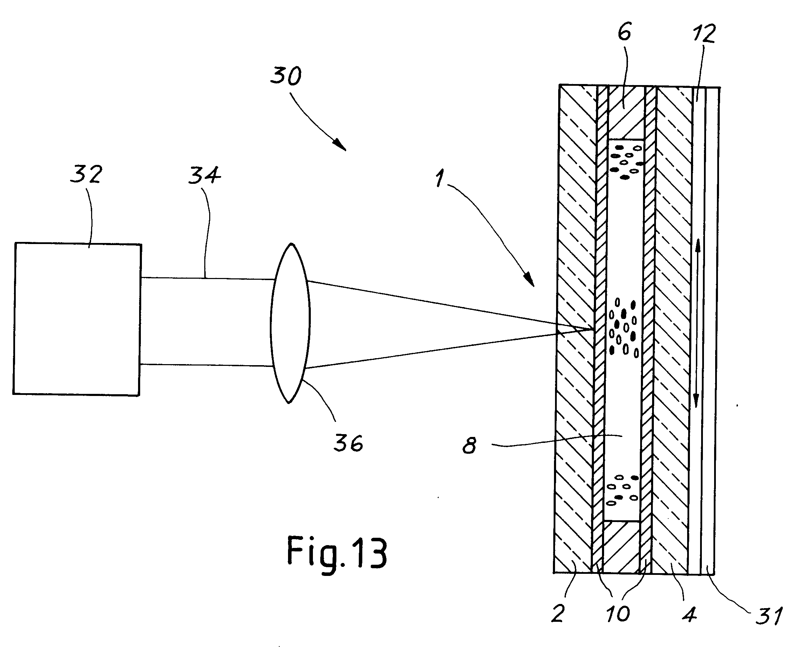

En se référant maintenant à la figure 13, on voit un dispositif d'affichage 30 selon l'invention. Ce dispositif 30 comprend une cellule à cristal liquide identique à celle décrite en liaison avec la figure 1 comprenant en outre un réflecteur 31. Cette cellule est associée à des moyens de commande 32 comprenant un système apte à engendrer ce faisceau laser 34 en combinaison avec un système optique 36 de balayage et de focalisation du faisceau 34.

Dans un mode de réalisation préféré de ce dispositif, la cellule comprend une couche d'un matériau absorbant dans l'infrarouge (non représenté) dont la bande d'absorption est proche ou identique à la longeur d'onde d'émission du faisceau 34.

Dans un tel dispositif, l'énergie du faisceau 34 est transformée, à l'aide de la couche absorbant dans l'infrarouge, en énergie thermique ce qui entraîne un échauffement local de la couche d'alignement 20 qui bascule les molécules de cristal liquide de l'alignement homéotrope à l'alignement planaire. Comme cela est expliqué en liaison avec la figure 2.

L'invention concerne l'application de polymères halogénés solubles du type éthylénique substitué éthylène cycloaliphatique ou hétérocycloaliphatique. au domaine des cellules à cristal liquide pour former une couche d'alignement. On va maintenant décrire, à titre d'exemple un mode de dépôt d'un tel polymère sur une lame de cellule à cristal liquide telle que celle représentée à la figure 4. Dans cet exemple, on entend par substrat une lame de verre recouverte d'une ou plusieurs électrodes transparentes réalisées en oxyde d'indium dopé.

On procède tout d'abord à un lavage du substrat dans un bain de détergent alcalin, en présence d'une agitation ultrasonique. Le substrat est alors rincé dans une cascade d'eau déionisée puis séché dans un rinceur sécheur et ensuite dans une étuve ventilée à une température de 90° environ pendant 30 minutes.

On prépare par exemple une solution d'un copolymère de PDD et de TFE à 1 % en poids dans un mélange de solvants. Dans l'exemple, on a utilisé un polymère vendu par la société Du Pont de Nemours sous la dénomination AF-2400 et deux solvants vendus par la société 3M sous la dénomination Fluoroinert FC-43 et FC75. Bien entendu, un solvant unique ou tout autre solvant capable de dissoudre ce polymère peuvent être utilisés.

Cette solution à 1 % en poids est alors déposée sur le substrat à la tournette à une vitesse de 3000 tr/mn pendant 20 secondes. La couche obtenue a une épaisseur d'environ 70 nm. Le solvant est éliminé dans une étuve avec ventilation programmable selon le programme suivant : chauffage du substrat à 90°C à une vitesse de 8°C/mn, maintien du substrat à 90°C pendant 30 mn, chauffage à 250°C à une vitesse de 5°C/mn, maintien à 250°C pendant 20 mn et refroidissement à la température ambiante. Après ce traitement, le substrat est brossé au moyen d'un cylindre recouvert de velours afin d'induire un alignement dans une direction homogène lors de variations de températures.

On assemble deux substrats obtenus selon ce procédé au moyen d'une colle durcissant au rayonnement ultraviolet et en interposant le cas échéant des espaceurs formés de fibres de verre de 9 $\mu$m de diamètre. Un mélange dichroïque ZLI 4530 produit par Merck est ensuite introduit par capillarité et la cellule est fermée au moyen d'une colle. La cellule obtenue présente un alignement sensible à la température.

Dans le cas d'une cellule selon l'invention munie d'une couche d'un matériau absorbant dans l'infrarouge. Celle-ci est déposée en dissolvant l'absorbant infrarouge dans une solution de polymère stable thermiquement, par exemple dans un polyimide et en déposant la solution obtenue de façon classique, telle qu'à la tournette.

La concentration de l'absorbeur dans la solution de polymère peut varier en fonction de l'absorption désirée et typiquement des concentrations de 1 à 10 % en solution sont particulièrement avantageuses.

Dans le cas où l'absorbeur infrarouge se trouve au sein du cristal liquide ou au sein de la couche d'alignement, il peut être directement dissout dans ces derniers.

## Revendications

1. Cellule à cristal liquide comportant une première lame (2), une seconde lame (4) et un cadre de scellement (6) interposé entre les deux lames pour former un volume étanche dans lequel est emprisonné un matériau optiquement actif (8) comportant au moins un cristal liquide dont une caractéristique optique est susceptible d'être modifiée quand il est soumis à au moins une contrainte déterminée, au moins l'une desdites lames étant recouvertes d'une couche d'alignement, caractérisée en ce que ladite couche d'alignement (10) comprend un polymère appartenant à la famille des polymères halogénés solubles du type éthylénique substitué éthylène cycloaliphatique ou hétérocycloaliphatique.

2. Cellule selon la revendication 1, caractérisée en ce que le polymère est fluoré.

3. Cellule selon la revendication 1 ou 2, caractérisée en ce que le polymère est perfluoré.

4. Cellule selon les revendications 1, 2 ou 3, caractérisée en ce que le polymère est substitué cyclooxyaliphatique.

5. Cellule selon la revendication 4, caractérisée en ce que le polymère est un copolymère de tétrafluoroéthylène avec le bis 2,2-trifluorométhyle-4,5-difluoro-1,3-dioxole.

6. Cellule selon la revendication 5, caractérisée en ce que ledit copolymère comprend environ 60 à 70 % de bis-2,2-trifluorométhyle-4,5-difluoro-1,3-dioxole et 30 à 40 % de tétrafluoroéthylène.

7. Cellule selon la revendication 5, caractérisée en ce que ledit copolymère comprend environ 85 à 95 % de bis-2,2-trifluorométhyle-4,5-difluoro-1,3-dioxole et 5 à 15 % de tétrafluoroéthylène.

8. Cellule selon l'une des revendications 1 à 5, caractérisée en ce que ledit copolymère comprend un mélange des copolymères selon les revendications 6 et 7.

9. Cellule selon l'une quelconque des revendications 1 à 8, caractérisée en ce que ledit polymère est mélangé avec un second polymère soluble dans le même solvant ou avec une dispersion d'un second polymère.

10. Cellule selon l'une quelconque des revendications précédentes, caractérisée en ce que ladite couche d'alignement (10) comprend une sous-couche d'un matériau différent.

**11.** Cellule selon la revendication 10, caractérisée en ce que ladite sous-couche est un polymère selon l'une quelconque des revendications 1 à 8.

**12.** Cellule selon l'une quelconque des revendications précédentes, caractérisée en ce que la caractéristique optique du matériau optiquement actif (8) est commandée par une contrainte thermique exercée sur la couche d'alignement (10) de ladite lame (2, 4).

**13.** Cellule selon l'une des revendications précédentes, caractérisée en ce que la caractéristique optique du matériau optiquement actif (8) est commandée électriquement au moyen d'une tension appliquée sur des électrodes (20, 22) prévues sur chaque lame (2, 4).

**14.** Cellule selon la revendication 13, caractérisée en ce que les électrodes (20, 22) recouvrent la totalité de la surface de chaque lame (2, 4).

**15.** Cellule selon l'une quelconque des revendications précédentes, caractérisée en ce que le matériau optiquement actif (8) est un mélange de cristaux liquides et de composants chiraliques et en ce qu'elle comprend en outre un polariseur (12) sur une des lames (4).

**16.** Cellule selon l'une quelconque des revendications précédentes, caractérisée en ce qu'elle comprend en outre une substance absorbant dans l'infrarouge.

**17.** Cellule selon la revendication 16, caractérisée en ce que la substance absorbant dans l'infrarouge a la forme d'une couche disposée entre une lame et la couche d'alignement.

**18.** Cellule selon la revendication 6, 7 ou 8 et 13, caractérisée en ce qu'elle est associée à un cristal liquide dont le rapport de sa constante élastique de flexion avec sa constante élastique de déformation en éventail $K_3/K_1$ est supérieur ou égal à 1 à température ambiante et en ce qu'elle présente un rapport $T_{HP}/T_{NI}$ inférieur ou égal à 1/3.

**19.** Cellule selon la revendication 18, caractérisée en ce que le rapport $K_3/K_1$ est supérieur ou égal à 1,5.

**20.** Cellule selon la revendication 6, 7 ou 8 et 13, caractérisée en ce qu'elle est associée à un cristal liquide dont le rapport de sa constante élastique de flexion avec sa constante élastique de déformation en éventail $K_3/K_1$ est inférieur ou égal à 2 à la température ambiante et en ce qu'elle présente un rapport $T_{HP}/T_{NI}$) supérieur ou égal à 2/3.

**21.** Cellule selon la revendication 20, caractérisée en ce que le rapport $K_3/K_1$ est inférieur ou égal à 1,5.

**22.** Dispositif d'affichage à cristal liquide comprenant une cellule selon l'une quelconque des revendications précédentes et des moyens de commande, caractérisé en ce que les moyens de commande comprennent un système apte à engendrer un faisceau laser.


**Patentansprüche**

**1.** Flüssigkristallzelle mit einer ersten Scheibe (2), einer zweiten Scheibe (4) und einem Versiegelungsrahmen (6) der zwischen den beiden Scheiben eingefügt ist, zum Bilden eines abgedichteten Volumens, in dem ein optisch aktives Material (8) eingefangen ist, das mindestens einen Flüssigkristall umfaßt, von dem eine optische Charakteristik veränderbar ist, wenn er mindestens einer vorbestimmten Belastung unterworfen wird, wobei mindestens eine der Scheiben mit einer Ausfluchtungsbeschichtung versehen ist, dadurch gekennzeichnet, daß die Ausfluchtungsbeschichtung (10) einen Polymer umfaßt, der zur Familie der löslichen halogenierten Polymere vom äthylensubstituierten zykloaliphatischen oder heterozykloaliphatischen Äthylen gehört.

**2.** Zelle nach Anspruch 1, dadurch gekennzeichnet, daß der Polymer fluoriert ist.

**3.** Zelle nach Anspruch 1 oder 2, dadurch gekennzeichnet, daß der Polymer perfluoriert ist.

**4.** Zelle nach Ansprüchen 1, 2 oder 3, dadurch gekennzeichnet, daß der Polyer zykloaliphatisch substituiert ist.

**5.** Zelle nach Anspruch 4, dadurch gekennzeichnet, daß der Polymer ein Copolymer von Tetrafluoroäthylen mit dem bis-2,2-Trifluoromethyl-4,5-Difluoro-1,3-Dioxol ist.

**6.** Zelle nach Anspruch 5, dadurch gekennzeichnet, daß der Copolymer etwa 60 bis 70% von bis-2,2-Trifluoromethyl-4,5-Difluoro-1,3-Dioxol und 30 bis 40% des Tetrafluoroäthylens umfaßt.

**7.** Zelle nach Anspruch 5, dadurch gekennzeichnet, daß der Copolymer etwa 85 bis 95% bis-2,2-Trifluoromethyl-4,5-Difluoro-1,3-Dioxol und 5 bis 15% Tetrafluoroäthylen umfaßt.

**8.** Zelle nach einem der Ansprüche 1 bis 5, dadurch gekennzeichnet, daß der Copolymer ein Gemisch der Copolymere nach Ansprüchen 6 und 7 umfaßt.

**9.** Zelle nach einem der Ansprüche 1 bis 8, dadurch gekennzeichnet, daß der Polymer ein Gemisch mit einem zweiten Polymer ist, der in demselben Lösungsmittel löslich ist, oder mit einer Dispersion eines zweiten Polymers.

**10.** Zelle nach einem der vorangehenden Ansprüche, dadurch gekennzeichnet, daß die Ausfluchtungsschicht 10 eine Unterschicht eines anderen Materials umfaßt.

**11.** Zelle nach Anspruch 10, dadurch gekennzeichnet, daß die Unterschicht ein Polymer nach einem der Ansprüche 1 bis 8 ist.

**12.** Zelle nach einem der vorangehenden Ansprüche, dadurch gekennzeichnet, daß die optische Charakteristik des optisch aktiven Materials (8) durch eine thermische Belastung gesteuert wird, die auf die Ausfluchtungsschicht (10) der Scheibe (2, 4) ausgeübt wird.

**13.** Zelle nach einem der vorangehenden Ansprüche, dadurch gekennzeichnet, daß die optische Charakteristik des optisch aktiven Materials (8) elektrisch gesteuert wird mittels einer Spannung, angelegt an Elektroden (20, 22), die auf jeder Scheibe (2, 4) vorgesehen sind.

**14.** Zelle nach Anspruch 13, dadurch gekennzeichnet, daß die Elektroden (20, 22) die Gesamtheit der Oberfläche jeder Scheibe (2, 4) abdecken.

**15.** Zelle nach einem der vorangehenden Ansprüche, dadurch gekennzeichnet, daß das optisch aktive Material (8) ein Gemisch aus Flüssigkristallen und chiralen Komponenten ist und daß sie ferner einen Polarisator (12) auf einer der Scheiben (4) umfaßt.

**16.** Zelle nach einen der vorangehenden Ansprüche, dadurch gekennzeichnet, daß sie ferner eine im Infraroten absorbierende Substanz umfaßt.

**17.** Zelle nach Anspruch 16, dadurch gekennzeichnet, daß die im Infraroten absorbierende Substanz die Form einer Schicht aufweist, die zwischen einer Scheibe und der Ausfluchtungsschicht angeordnet ist.

**18.** Zelle nach Anspruch 6, 7 oder 8 und 13, dadurch gekennzeichnet, daß ihr ein Flüssigkristall zugeordnet ist, dessen Verhältnis seiner elastischen Flexionskonstante zu seiner elastischen Fächerdeformationskonstante $K_3/K_1$ größer oder gleich 1 ist bei Umgebungstemperatur, und daß sie ein Verhältnis $T_{HP}/T_{NI}$ kleiner oder gleich 1/3 aufweist.

**19.** Zelle nach Anspruch 18, dadurch gekennzeichnet, daß das Verhältnis $K_3/K_1$ größer oder gleich 1,5 ist.

**20.** Zelle nach Anspruch 6, 7 oder 8 und 13, dadurch gekennzeichnet, daß ihr ein Flüssigkristall zugeordnet ist, dessen Verhältnis seiner elastischen Flexionskonstante zu seiner elastischen Fächerdeformationskonstante $K_3/K_1$ kleiner oder gleich 2 ist bei Umgebungstemperatur, und daß sie ein Verhältnis $T_{HP}/T_{NI}$ oberhalb oder gleich 2/3 aufweist.

**21.** Zelle nach Anspruch 20, dadurch gekennzeichnet, daß das Verhältnis $K_3/K_1$ kleiner oder gleich 1,5 ist.

**22.** Flüssigkristallanzeigevorrichtung mit einer Zelle nach einer der vorangehenden Ansprüche und Steuermitteln, dadurch gekennzeichnet, daß die Steuermittel ein System umfassen, mittels dem ein Laserstrahl erzeugbar ist.

## Claims

1. Liquid crystal cell having a first plate (2), a second plate (4) and a sealed frame (6) disposed between the two plates to thereby form a sealed volume in which is contained an optically active material (8) which comprises at least one liquid crystal having an optical characteristic which can be modified when it is subjected to at least one predetermined constraint, at least one of said plates being covered by an alignment layer, characterized in that said alignment layer (10) comprises a polymer belonging to the family of soluble halogenated ethylenic polymers of the substituted ethylenic cycloaliphatic or heterocycloaliphatic type.

2. Cell according to claim 1, characterized in that the polymer is fluorinated.

3. Cell according to claim 1 or 2, characterized in that the polymer is perfluorinated.

4. Cell according to claim 1, 2 or 3, characterized in that the polymer is cyclooxyaliphatic substituted.

5. Cell according to claim 4, characterized in that the polymer is a copolymer of tetrafluoroethylene with bis-2,2-trifluoromethyl-4,5-difluoro-1,3-dioxole.

6. Cell according to claim 5, characterized in that said copolymer comprises about 60 to 70 % of bis-2,2-trifluoromethyl-4,5-difluoro-1,3-dioxole and 30 to 40 % of tetrafluoroethylene.

7. Cell according to claim 5, characterized in that said copolymer comprises about 85 to 95 % of bis-2,2-trifluoromethyl-4,5-difluoro-1,3-dioxole and 5 to 15 % of tetrafluoroethylene.

8. Cell according to one of claims 1 to 5, characterized in that said copolymer comprises a mixture of the copolymers according to claims 6 and 7.

9. Cell according to any one of claims 1 to 8, characterized in that said copolymer is mixed with a second polymer soluble in the same solvent or with a dispersion of a second polymer.

10. Cell according to any one of the preceding claims, characterized in that said alignment layer (10) comprises an underlayer of a different material.

11. Cell according to claim 10, characterized in that said underlayer is a polymer according to any one of claims 1 to 8.

12. Cell according to any one of the preceding claims, characterized in that the optical characteristic of the optically active material (8) is controlled by a thermal constraint exerted on the alignment layer (10) of said plate (2, 4).

13. Cell according to any one of the preceding claims, characterized in that the optical characteristic of the optically active material (8) is electrically controlled by means of a voltage applied to the electrodes (20, 22) provided on each plate (2, 4).

14. Cell according to claim 13, characterized in that the electrodes (20, 22) cover the entire surface of each plate (2, 4).

15. Cell according to any one of the preceding claims, characterized in that the optically active material (8) is a mixture of liquid crystals and of chiral components and in that it further comprises a polarizer (12) on one of the plates (4).

16. Cell according to any one of the preceding claims, characterized in that it also comprises a substance absorbing within the infrared range.

17. Cell according to claim 16, characterized in that the substance absorbing within the infrared range takes the form of a layer arranged between a plate and the alignment layer.

18. Cell according to claim 6, 7 or 8 and 13, characterized in that it is associated with a liquid crystal in which the ratio of its bend elastic constant with its splay elastic constant $K_3/K_1$ is greater than or equal to 1 at ambient temperature and in that it presents a ratio $T_{HP}/T_{NI}$ less than or equal to 1/3.

**19.** Cell according to claim 18, characterized in that the ratio $K_3/K_1$ is greater than or equal to 1.5.

**20.** Cell according to claim 6, 7 or 8 and 13, characterized in that it is associated with a liquid crystal in which the ratio of its bend elastic constant with its splay elastic constant $K_3/K_1$ is less than or equal to 2 at ambient temperature and in that it presents a ratio $T_{HP}/T_{NI}$ is greater than or equal to 2/3.

**21.** Cell according to claim 20, characterized in that the ratio $K_3/K_1$ is less than or equal to 1.5.

**22.** Liquid crystal display device comprising a cell according to any one of the preceding claims and control means, characterized in that the control means comprise a system capable of generating a laser beam.

Fig.1

Fig.2

Fig.3

Fig.4

Fig.5

Fig.6

EP 0 476 527 B1

Fig. 7

EP 0 476 527 B1

Fig.8

EP 0 476 527 B1

Fig.9

Fig.10

EP 0 476 527 B1

Fig.11

Fig.12

Fig.13